# EUROPEAN PATENT SPECIFICATION

(11) **EP 3 317 011 B1**
(45) Date of publication and mention of the grant of the patent: **11.09.2019**
(21) Application number: 16738220.9
(22) Date of filing: 17.06.2016
(51) Int. Cl.: B01J 20/22, B01J 20/32, B01J 20/28, B01J 20/30, B01D 53/72

(54) **A CHEMICAL FORMALDEHYDE FILTER**
CHEMISCHER FORMALDEHYDFILTER
FILTRE À FORMALDÉHYDE CHIMIQUE

(30) Priority: 30.06.2015 WO PCT/CN2015/082920
(43) Date of publication of application: 09.05.2018
(73) Proprietor: Koninklijke Philips N.V., 5656 AE Eindhoven (NL)
(72) Inventor: KE, Rui, 5656 AE Eindhoven (NL); WEI, Huibin, 5656 AE Eindhoven (NL); SU, Jing, 5656 AE Eindhoven (NL)
(74) Representative: Tassignon, Tom
(86) International application number: PCT/IB2016/053598
(87) International publication number: WO 2017/001961

(56) References cited:
- EP-A1- 2 327 672
- WO-A1-97/45189
- JP-A- 2004 115 340
- JP-A- 2006 272 047
- US-A1- 2005 092 176

## Description

### FIELD OF THE INVENTION

The present invention relates to a chemical formaldehyde filter, in particular a chemical formaldehyde filter useful for filtering formaldehyde from air, e.g. in an air cleaner or an air purifier.

### BACKGROUND OF THE INVENTION

Formaldehyde is a toxic and carcinogenic compound, which is one of the indoor pollutants of most concern, e.g. in newly decorated homes. Due to its small molecular weight (30 g/mol) and high vapour pressure (3883 mmHg [2078 in H₂O] at 25°C), it is not easy to capture formaldehyde by physical absorption, e.g. using activated carbon or zeolite absorbent. Therefore, chemisorption filters have been developed to effectively abate formaldehyde. Previous work has demonstrated that chemisorption filters have high clean air delivery rate (CADR) and relative high capacity according to Chinese standard GB_T 18801-2008.

However, current chemisorption filters for formaldehyde removal, prepared by impregnating chemical solutions on porous substrates, still have problems. One such problem is that the impregnated filter leaks out chemical solutions at high humidity (>80%); this is a particular concern in parts of the world that experience high humidity conditions, e.g. southern China. It is possible that this leaking is mainly caused by the way the filters are prepared which involves the use of hydroscopic agents. To take out the hydroscopic agent from the chemical recipe is not ideal for overcoming leakage from the filter, because in the absence of hydroscopic agents the performance of the chemisorption filter is then compromised at low humidity. Furthermore, the current way of impregnating chemicals onto the substrate tends to result in weak binding between the chemical absorbent and the substrate they are applied to. At high humidity, the chemical absorbent overcomes these weak binding forces and the absorbent is released from the filter substrate. For example, air passing through the filter blows the absorbent off generating liquid droplets (aerosol) which are distributed in the air, inhaled by consumers and may cause unknown health risks. The other problem is that at high humidity water can accumulate on the filter substrate and drop off, i.e. leakage.

Document US4892719 discloses a filter for removing formaldehyde comprising a polymeric amine coated on a fibre glass filter.

Document US 4724242 discloses an absorbent comprising plaster gypsum and a carbonaceous material for filters used for removal of gaseous fluids such as formaldehyde.

The other problem associated with current chemisorption filters is they exhibit low reactive surface area. Current methods involve impregnating a chemical solution in a filter substrate and subsequently removing the water by evaporation. However, the chemicals impregnated in the substrate have a tendency to aggregate on the surface instead of staying in the substrate pores. This leads to a reduction in reactive surface area and low levels of chemical inside the filter substrate.

### SUMMARY OF THE INVENTION

It is an object of the invention to provide a chemical formaldehyde filter which substantially alleviates or overcomes one or more of the problems mentioned above.

The invention is defined by the independent claims. The dependent claims define advantageous embodiments.

According to the present invention, there is provided a chemical formaldehyde filter comprising a filter substrate having a porous structure; the filter substrate comprises a mixture of a formaldehyde absorbent and a porous framework material. According to an embodiment if the invention, the filter substrate is made or fabricated from a mixture of a formaldehyde absorbent and a porous framework material.

When the filter substrate is made from a mixture of a formaldehyde absorbent and a porous framework material, the filter substrate exhibits high mechanical strength. Also, in a mixture of framework material and absorbent, the framework material can immobilize the absorbent via capillary or other forces at high humidity. As a result, the filter of the present invention avoids absorbent being blown away, and avoids leakage of absorbent. Furthermore, the invention can be carried out at relatively low cost, e.g. by using appropriate framework materials such as plaster. The mixture of formaldehyde absorbent and framework material also generates large microspheres (e.g. tens of micrometers) at microscopic level, thereby providing a beneficial increase in reactive surface area.

The formaldehyde adsorbent is an active agent that is capable of capturing and/or absorbing formaldehyde. Any known formaldehyde absorbent can be employed. Chemical formaldehyde absorbents are particularly suitable.

In one embodiment, the formaldehyde absorbent is an amine-containing formaldehyde absorbent chemical compound. Suitable examples of amine-containing formaldehyde absorbent chemical compound include but are not limited to hydroxalkylamines, amine-containing polymers, amine-containing silicas, and amine-containing zeolites. A preferred formaldehyde absorbent is tris(hydroxymethyl)aminomethane (TRIS).

In one embodiment, the mixture further comprises an alkaline buffering agent. In order to maintain alkalinity, the amine-based chemicals may be mixed with a buffering agent. For example, an alkaline earth/alkali metal salt may be employed as buffering agent. Suitable salts include hydrogen carbonate and formate salts. Preferred salts include potassium formate (KHCOO) and potassium hydrogen carbonate (KHCO₃). The buffering agent may be incorporated into the mixture using a buffering solution comprising an alkaline buffering agent. A single buffering agent or a combination of two or more buffering agents can be employed. The inclusion of an alkaline buffering agent also helps provide large microspheres on the surface of the filter. The microspheres result in a high surface area at which contact can be made between the formaldehyde absorbent and formaldehyde in the air being purified. The effectiveness/efficiency of the filter is therefore improved.

Suitable inorganic porous framework materials are plaster, plaster gypsum, lime. Preferred materials include but are not limited to calcium sulfates and hydrates thereof, e.g. β-CaSO₄.2H₂O or β-CaSO₄.1/2H₂O. Alternatively, the porous framework material may be an organic porous material, e.g. large pore resins. These framework materials provide high mechanical strength and help immobilise the absorbent to avoid leakage and absorbent being blown away. These framework materials also provide microspheres on the surface of the filter which increase the reactive surface area of the filter and improve efficacy.

In one embodiment, the filter substrate may have a honeycomb structure. A honeycomb structure provides a large contact area (potentially greater than 3m² per litre) and thus is very attractive as the substrate of a high performance formaldehyde filter.

The present invention also provides a method of fabricating a chemical formaldehyde filter (e.g. as described herein) which comprises mixing a solution containing a formaldehyde absorbent with a porous framework material; casting the resulting mixture into a monolith structure; and drying the cast mixture.

The method provides a chemical formaldehyde filter exhibiting all the advantages referred to above described in the context of the chemical formaldehyde filter product. In addition, the drying step helps provide large microspheres on the surface of the filter. The microspheres result in a high surface area at which contact can be made between the formaldehyde absorbent and formaldehyde in the air being purified. The effectiveness/efficiency of the filter is therefore improved.

The drying step may be carried out by any means at any appropriate temperature. A suitable temperature for the drying step is from about 25°C to about 150°C, preferably from about 50°C to about 150°C.

In one embodiment, the solution containing a formaldehyde absorbent is an aqueous solution, preferably further comprising an alkaline buffering agent. The inclusion of an alkaline buffering agent in an aqueous solution helps to maintain alkalinity. Suitable buffering agents are described above. A single buffering agent or a combination of two or more buffering agents can be employed. The inclusion of an alkaline buffering agent also helps provide large microspheres on the surface of the filter, e.g. during the drying step. The microspheres result in a high surface area at which contact can be made between the formaldehyde absorbent and formaldehyde in the air being purified. The effectiveness/efficiency of the filter is therefore improved.

The aqueous solution may contain any suitable amount/concentration of formaldehyde absorbent. Suitable amounts include but are not limited to from 5 to 95% solutions of absorbent, such as from 10 to 30%, and 15 to 25% solutions of absorbent.

The framework material and the aqueous solution may be mixed in any suitable ratio. Suitable weight ratios of framework material : aqueous solution include but are not limited to from 5:1 to 1:5, and from 2:1 to 1:2. A preferred weight ratio of framework material: aqueous solution is about 1:1.

Buffering agents may also be included in the aqueous solution in any suitable amount. Suitable amounts include but are not limited to aqueous solutions comprising from 5 to 95% buffering agent(s), from 5 to 40% buffering agent(s), and from 25 to 35% buffering agents(s). A preferred aqueous solution comprises 30% buffering agent(s).

A preferred aqueous solution comprises 20% absorbent (e.g. TRIS), 30% buffering agent (e.g. 15% KHCOO and 15% KHCO₃).

The monolithic structure may be a honeycomb structure. Furthermore, the monolithic structure may be formed by moulding a mixture of porous framework material and formaldehyde absorbent. For example, the mixture may be well tuned and cast into a monolith honeycomb structure. Alternatively, the mixture may be extruded through a mould to form a honeycomb structure.

According to an embodiment of the invention, the filter substrate is coated with a mixture of a formaldehyde absorbent and a porous framework material. This mixture may comprise any of the components as described in this disclosure.

The framework material employed in the filter forms strong bonds with the filter substrate (such as a honeycomb structure). Also, in a mixture of framework material and absorbent, the framework material can immobilize the absorbent via capillary or other forces at high humidity. As a result, the filter of the present invention avoids absorbent being blown away, and avoids leakage of absorbent. Furthermore, the invention can be carried out at relatively low cost, e.g. by using appropriate framework materials such as plaster. The mixture of formaldehyde absorbent and framework material also generates large pores (e.g. tens of micrometers) at microscopic level, thereby providing a beneficial increase in reactive surface area.

The filter structure may be any suitable substrate including but not limited to honeycomb ceramics, corrugated paper, or honeycomb polymers.
Suitable formaldehyde absorbents and framework materials are discussed in the context of other embodiments described herein.

The present invention also provides a method of fabricating a chemical formaldehyde filter (e.g. as described herein) which comprises providing a mixture of a formaldehyde absorbent and a porous framework material; coating the mixture on a filter substrate; and drying the filter substrate.

The method provides a chemical formaldehyde filter exhibiting all the advantages referred to above described in the context of the chemical formaldehyde filter product. In addition, the drying step provides large microspheres on the surface of the filter. The microspheres result in a high surface area at which contact can be made between the formaldehyde absorbent and formaldehyde in the air being purified. The effectiveness/efficiency of the filter is therefore improved.

The drying step may be carried out by any means at any appropriate temperature. A suitable temperature for the drying step is from about 25°C to about 150°C, preferably from about 50°C to about 150°C.

The mixture of formaldehyde absorbent and porous framework material may be prepared by mixing an aqueous solution of a formaldehyde absorbent with a framework material. For example, the mixture may be in the form of a slurry. The solution containing a formaldehyde absorbent may be an aqueous solution, preferably further comprising a buffering agent. The inclusion of a buffering agent in an aqueous solution helps to maintain alkalinity. Suitable buffering agents are described above. A single buffering agent or a combination of two or more buffering agents can be employed. Suitable buffering agents/solutions are described above.

The aqueous solution may contain any suitable amount/concentration of formaldehyde absorbent. Suitable amounts include but are not limited to from 5 to 95% solutions of absorbent, such as from 10 to 30%, and 15 to 25% solutions of absorbent.

The framework material and aqueous solution may be mixed in any suitable ratio. Suitable weight ratios of framework material: aqueous solution include but are not limited to from 5:1 to 1:5, and from 2:1 to 1:2. A preferred weight ratio of framework material: aqueous solution is about 1:0.8.

Buffering agents may also be included in the aqueous solution in any suitable amount. Suitable amounts include but are not limited to aqueous solutions comprising from 5 to 95% buffering agent(s), from 5 to 40% buffering agent(s), and from 25 to 35% buffering agents(s). A preferred aqueous solution comprises 30% buffering agent(s).

A preferred aqueous solution comprises 20% absorbent (e.g. TRIS), 30% buffering agent (e.g. 15% KHCOO and 15% KHCO₃).
In an alternative embodiment, the buffering agent can be applied to the filter substrate before the mixture of absorbent and framework material. For example, the method may further comprise a step of immersing the filter substrate in an aqueous solution comprising a buffering agent prior to the step of coating the mixture on the filter substrate. According to a further aspect, the invention provides an air cleaning apparatus comprising a chemical formaldehyde filter as described herein.

These and other aspects of the invention will be apparent from and elucidated with reference to the examples described hereinafter.

### BRIEF DESCRIPTION OF THE DRAWINGS

Embodiments of the invention will now be described, by way of example only, with reference to the accompanying drawings, in which:
Figure 1A shows a microscopic image of the ceramic substrate coated with functional framework material (formaldehyde absorbent and framework material) prepared in Example 2.
Figure 1B shows an SEM image of the functional framework material on the surface of the ceramic substrate prepared in Example 2.
Figure 2 is a graph showing relative humidity change in the test chamber of Example 2.
Figure 3A is a graph showing the results of Clean Air Delivery Rate tests carried out at RH 90% in Example 2.
Figure 3B is a graph showing relative humidity change during the test carried out at RH 90% in Example 2.
Figure 3C is a graph showing the results of Clean Air Delivery Rate tests carried out at RH 30% in Example 2.
Figure 3D is a graph showing relative humidity change during the test carried out at RH 30% in Example 2.
Figure 4A shows the filter structure of Example 3.
Figure 4B is a graph showing the results of Clean Air Delivery Rate tests carried out at RH 70% in Example 3.
Figure 5A shows the filter structure of Example 4.
Figure 5B is a graph showing the CADR test results carried out at RH 50% in Example 4.

### EXAMPLES

### Example 1

A chemical formaldehyde filter is made by moulding a mixture of a framework material and an active agent (i.e. formaldehyde absorbent). The framework material is β-CaSO₄•1/2H₂O. The active agent is TRIS. The active agent is mixed with the framework material as part of an aqueous solution containing 20% TRIS, 15% KHCOO, and 15% KHCO₃. The framework material is mixed with the aqueous solution at 1:1 weight ratio to form a functional framework material (i.e. a mixture of a formaldehyde absorbent and a framework material). The functional framework material is cast on a mould to form a filter having a honeycomb structure and then put in the oven to dry the material. The filter is baked at 100°C overnight. The filter is obtained by detaching the material from the mould.

### Example 2

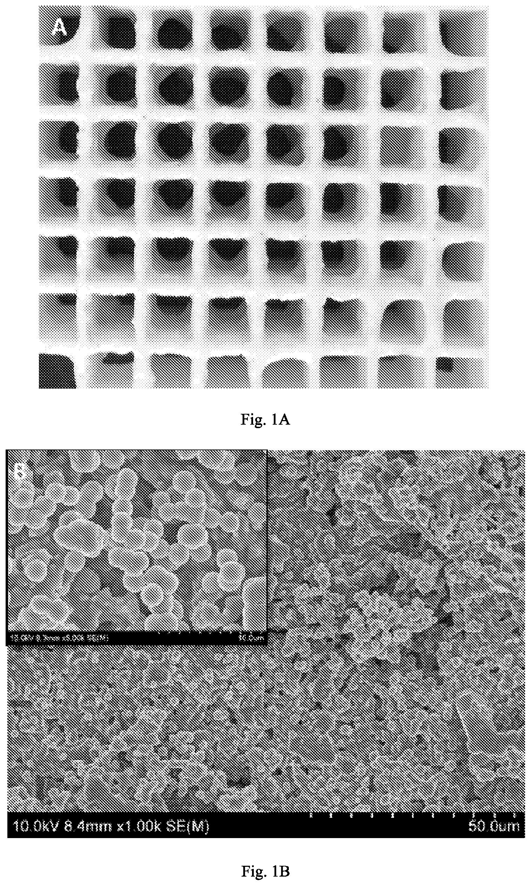

A chemical formaldehyde filter is made by coating a mixture of a framework material and an active agent (i.e. formaldehyde absorbent) on a ceramic substrate. The framework material is β-CaSO₄•1/2H₂O. The active agent is TRIS. The active agent is mixed with the framework material as part of an aqueous solution containing 20% TRIS. The framework material is mixed with the aqueous solution at 1: 0.8 weight ratio to form a functional framework material. A ceramic substrate is immersed in solution containing 20% TRIS, 15% KHCOO, and 15% KHCO₃. The ceramic substrate is then coated with the functional framework material slurry, and shaken to let the slurry go through the holes in the ceramic substrate. Then, air is blown at and through the ceramic substrate to provide an even coating on the surface of the ceramic substrate and to avoid blocks in the honeycomb structure. The ceramic coated with functional frame material is then dried in the oven at 100°C for 1 hour to form microsphere on the filter surface. Figure 1A shows a microscopy image of the ceramic substrate coated with formaldehyde absorbent and framework material. Figure 1B shows an SEM image of the functional framework material on the surface of the ceramic substrate. In Figure 1B, it can be seen that microspheres have been formed.

This filter was tested in 30 m³ chamber for water leakage test and clean air delivery rate measurement.

### Water leakage test

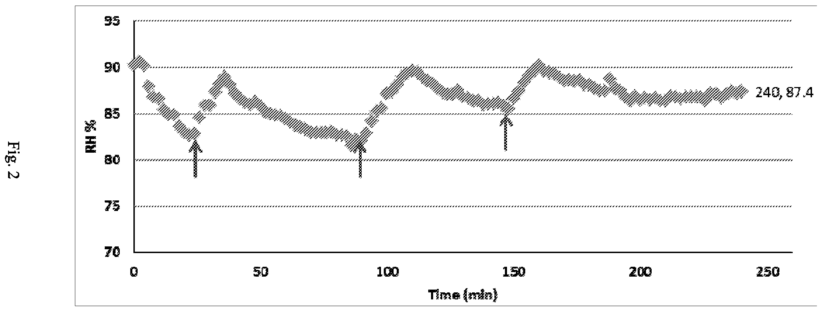

The new formaldehyde filter was placed in an air purifier (AC4072) and run in 30m³ at RH 90% for 4 hour continuously. There was no solution leakage from the filter. Figure 2 is a graph showing the change of relative humidity over time. Each arrow shows the point of increase in chamber humidity. From Figure 2, it is seen that the filter can absorb water and reach equilibrium at RH 87.4%. This result means the filter can store some water at high humidity without any solution leakage.

### Clean air delivery rate (CADR)

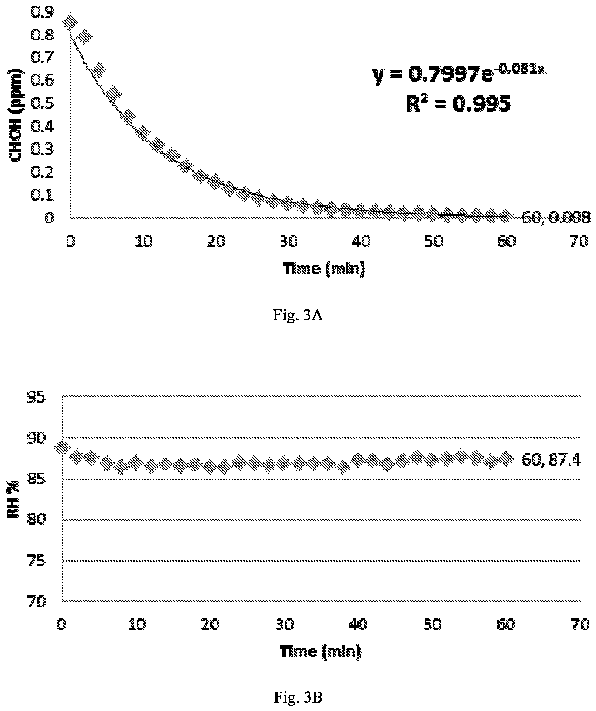

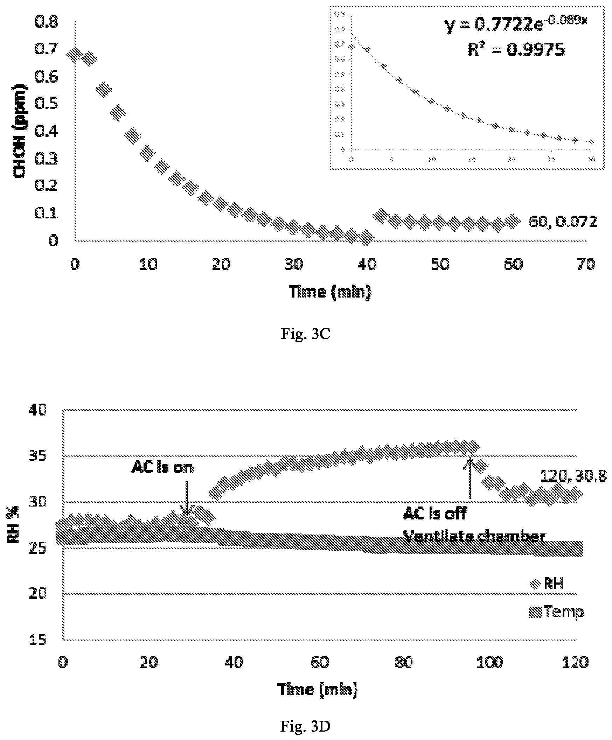

Air purifier (AC4072) with new formaldehyde filter was run in a test chamber for 3 hours keeping relative humidity around 90% (23°C). Then, a CADR test was run under high humidity conditions. After that, the relative humidity was reduced to 30% and another CADR value at low humidity was tested. Figures 3A-D show the CADR results at two humidity levels and the humidity change during the test. Figure 3A shows the CADR results (CHOH ppm) at RH 90% (high humidity). Figure 3B shows the change in relative humidity (RH %) over time during the high humidity test. Figure 3C shows the CADR results (CHOH ppm) at RH 30% (low humidity). Figure 3D shows the change in relative humidity (RH %) over time during the low humidity test. The diamond data points represent RH%. The square data points represent temperature. The arrows indicate where air conditioning is first turned on and then turned off. At high humidity, the filter was in equilibrium with chamber RH and no increase of RH was observed during one hour test. The CADR is 145.7m³/h from 1hour data and 160.2m³/h from 30min data. At low humidity, the chamber RH was increased due to the water desorption from frame material. The CADR value is 160.2m³/h from 30min data. From the RH change trend, it is seen that the filter can intake water at high humidity and release water at low humidity, which will make this filter work well over a large range of humidities.

All results demonstrate that the filter developed in this invention can solve problems of current chemisorption filter. The claimed filter can reach high reactive surface, high CADR value at low humidity, and no solution leakage.

### Example 3

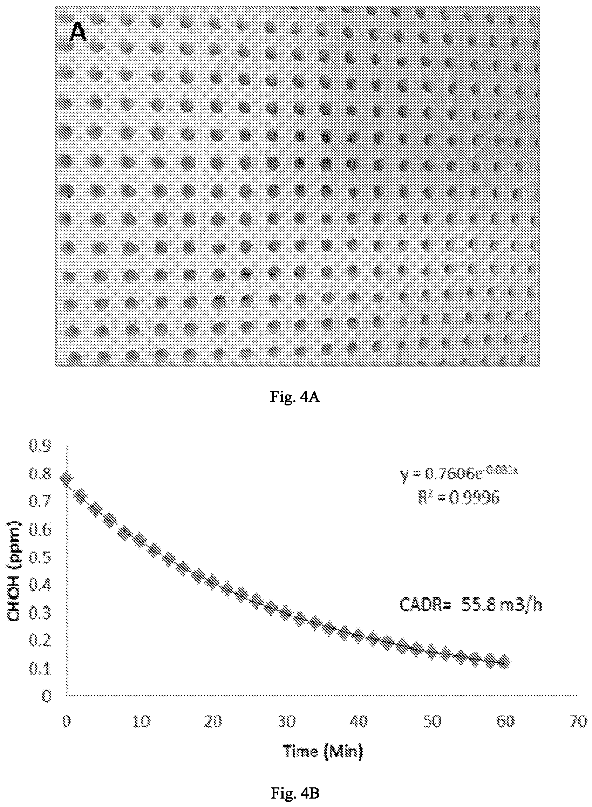

A chemical formaldehyde filter is made of an organic polymer sheet covered with functionalized framework material. The organic polymer sheet is made of polyvinyl alcohol. Functional framework material is a mixture of inorganic material and formaldehyde absorbent. Here, the inorganic material is β-CaSO4•2H₂O. The formaldehyde absorbent is TRIS and is employed as a formaldehyde absorbent solution containing 20% TRIS, 5% KHCOO, 5% KHCO₃. Inorganic material is mixed with the formaldehyde absorbent solution at 1:1 weight ratio. The size of organic polymer sheet covered with functionalized framework material is 36 cm in length, 28 cm in width and 1 cm in thickness. The holes were drilled with 5 mm diameter. The distance between holes is 5 mm. The organic polymer sheet covered in functionalised framework material is shown in Figure 4A.

The filter was evaluated in a 30 m³ chamber of an air purifier (AC 4072) at different humidities. Figure 4B shows the CADR test results (CHOH ppm) at RH 70%. The clean air delivery rate measured was 25.2m³/h at RH 50% and 55.8m³/h at RH 70% respectively. The results demonstrate that this filter can capture formaldehyde from the air and the filter works better at high humidity. No solution leakage is observed by running this filter at high humidity continuously.

The structure of filter could be adjusted. By increasing the holes number and reducing the diameter of holes, it is expected to have high clean air delivery rate. The hole could go down to 1 mm with 1 mm space by the way of making the filter.

### Example 4

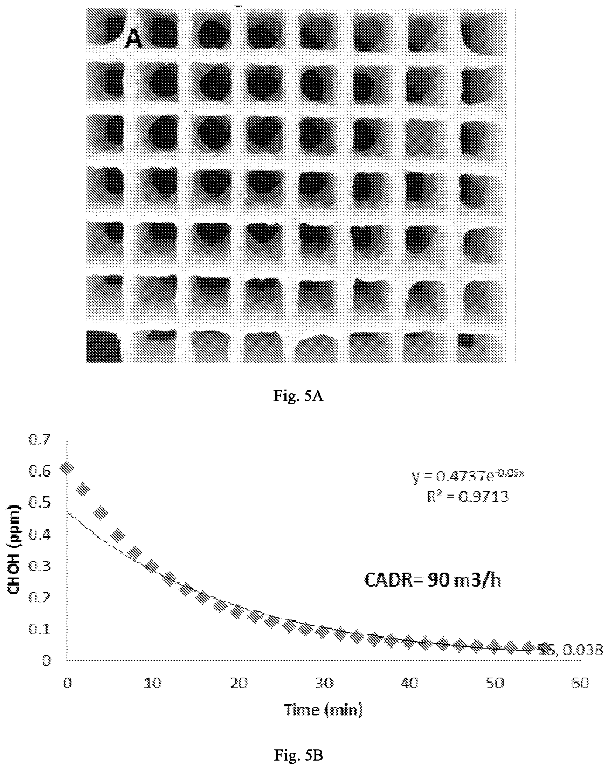

A chemical formaldehyde filter is made of honeycomb ceramics coated with a functional framework material. A honeycomb ceramic has 1 mm holes and 0.2 walls between each hole. The honeycomb ceramic is immersed in a solution of 10% KHCOO and 10% KHCO₃ before it is coated with functional framework material. The functional framework material is a mixture of plaster and 20% TRIS solution at 0.8: 1 weight ratio. The functional framework material is coated on the ceramic surface and is dried in the oven at 100°C. Figure 5A shows the filter structure of Example 4.

Performance of this filter was tested. Figure 5B is a graph showing the CADR test results (CHOH ppm) carried out at RH 50% - the filter is placed in a Philips air purifier AC 4072 and tested in a 30 m³ chamber. The clean air delivery rate at RH 50% was 90m³/h. Furthermore, there is no solution leakages observed by running the filter at RH 90% in a 3 m³ chamber continuously for 4 hours.

According to the inherent microstructure of this chemical formaldehyde filter and test results reported herein, the lifetime of this filter is demonstrated to be longer than currently known filters.

The above embodiments as described are only illustrative, and not intended to limit the technique approaches of the present invention. The indefinite article "a" or "an" does not exclude a plurality. Any reference signs in the claims should not be construed as limiting the scope.

## Claims

1. A chemical formaldehyde filter comprising a filter substrate having a porous structure; the filter substrate comprising a mixture of a formaldehyde absorbent and a porous framework material, wherein the formaldehyde absorbent is an amine-containing formaldehyde absorbent chemical compound, and the porous framework material is plaster, plaster gypsum, or lime.

2. The chemical formaldehyde filter according to claim 1, wherein the filter substrate is made from the mixture.

3. The chemical formaldehyde filter according to claim 1, wherein the filter substrate comprises a substrate coated with the mixture.

4. The chemical formaldehyde filter according to any of the preceding claims, wherein the formaldehyde absorbent is tris(hydroxymethyl)aminomethane.

5. The chemical formaldehyde filter according to any one of the preceding claims, wherein the mixture further comprises an alkaline buffering agent.

6. The chemical formaldehyde filter according to claim 5, wherein the buffering agent comprises one or more of a hydrogen carbonate salt and a formate salt.

7. The chemical formaldehyde filter according to claim 5 or 6, wherein the buffering agent comprises at least one of KHCOO and KHCO₃.

8. The chemical formaldehyde filter according to any one of the preceding claims, wherein the filter substrate has a honeycomb structure.

9. The chemical formaldehyde filter according to any of the preceding claims, wherein the porous framework material is β-CaSO₄.2H₂O or β-CaSO₄.1/2H₂O.

10. A method of fabricating a chemical formaldehyde filter, comprising:
mixing a solution containing a formaldehyde absorbent with a porous framework material;
casting the resulting mixture into a monolith structure and drying the cast mixture, or coating the resulting mixture on a substrate and drying said coated substrate, wherein the formaldehyde absorbent is an amine-containing formaldehyde absorbent chemical compound, and the porous framework material is plaster, plaster gypsum, or lime.

11. The method according to claim 10, wherein the drying step is carried out at a temperature of from about 25°C to about 150°C.

12. The method according to claim 10 or 11, wherein the solution containing a formaldehyde absorbent is an aqueous solution.

13. The method according to claim 12, wherein the aqueous solution further comprises a buffering agent.

14. The method according to claim 13, wherein the buffering agent comprises one or more of a hydrogen carbonate salt and a formate salt.

15. The method according to claim 13 or 14, wherein the buffering agent comprises at least one of KHCOO and KHCO₃.

## Patentansprüche

1. Chemischer Formaldehydfilter, umfassend ein Filtersubstrat mit einer porösen Struktur; wobei das Filtersubstrat ein Gemisch aus einem Formaldehydabsorbens und einem porösen Gerüstmaterial umfasst, wobei das Formaldehydabsorbens eine aminhaltige chemische Formaldehydabsorbensverbindung ist und das poröse Gerüstmaterial Putz, Gipsputz oder Kalk ist.

2. Chemischer Formaldehydfilter nach Anspruch 1, wobei das Filtersubstrat aus dem Gemisch besteht.

3. Chemischer Formaldehydfilter nach Anspruch 1, wobei das Filtersubstrat ein Substrat umfasst, das mit dem Gemisch beschichtet ist.

4. Chemischer Formaldehydfilter nach einem der vorstehenden Ansprüche, wobei das Formaldehydabsorbens Tris(hydroxymethyl)aminomethan ist.

5. Chemischer Formaldehydfilter nach einem der vorstehenden Ansprüche, wobei das Gemisch weiter ein alkalisches Puffermittel umfasst.

6. Chemischer Formaldehydfilter nach Anspruch 5, wobei das Puffermittel eines oder mehrere von einem Hydrogenkarbonatsalz und einem Formatsalz umfasst.

7. Chemischer Formaldehydfilter nach Anspruch 5 oder 6, wobei das Puffermittel mindestens eines von KHCOO und KHCO₃ umfasst.

8. Chemischer Formaldehydfilter nach einem der vorstehenden Ansprüche, wobei das Filtersubstrat eine Wabenstruktur hat.

9. Chemischer Formaldehydfilter nach einem der vorstehenden Ansprüche, wobei das poröse Gerüstmaterial β-CaSO₄.2H₂O oder β-CaSO₄.1/2H₂O ist.

10. Verfahren zum Herstellen eines chemischen Formaldehydfilters, umfassend
Mischen einer Lösung, die ein Formaldehydabsorbens beinhaltet, mit einem porösen Gerüstmaterial;
Gießen des erhaltenen Gemisches zu einer monolithischen Struktur und Trocknen des gegossenen Gemisches oder Auftragen des resultierenden Gemisches auf ein Substrat und Trocknen des beschichteten Substrats, wobei das Formaldehydabsorbens eine aminhaltige chemische Formaldehydabsorbensverbindung ist und das poröse Gerüstmaterial Putz, Gipsputz oder Kalk ist.

11. Verfahren nach Anspruch 10, wobei der Trocknungsschritt bei einer Temperatur von etwa 25°C bis etwa 150°C ausgeführt wird.

12. Verfahren nach Anspruch 10 oder 11, wobei die Lösung, die ein Formaldehydabsorbens beinhaltet, eine wässrige Lösung ist.

13. Verfahren nach Anspruch 12, wobei die wässrige Lösung weiter ein Puffermittel umfasst.

14. Verfahren nach Anspruch 13, wobei das Puffermittel eines oder mehrere von einem Hydrogenkarbonatsalz und einem Formatsalz umfasst.

15. Verfahren nach Anspruch 13 oder 14, wobei das Puffermittel mindestens eines von KHCOO und KHCO₃ umfasst.

## Revendications

1. Filtre à formaldéhyde chimique comprenant un substrat de filtre ayant une structure poreuse ; le substrat de filtre comprenant un mélange d'un absorbant de formaldéhyde et d'un matériau de trame poreux, dans lequel l'absorbant de formaldéhyde est un composé chimique d'absorbant de formaldéhyde contenant une amine et le matériau de trame poreux est du plâtre, du gypse à plâtre et de la chaux.

2. Filtre à formaldéhyde chimique selon la revendication 1, dans lequel le substrat de filtre est constitué à partir du mélange.

3. Filtre à formaldéhyde chimique selon la revendication 1, dans lequel le substrat de filtre comprend un substrat revêtu du mélange.

4. Filtre à formaldéhyde chimique selon l'une quelconque des revendications précédentes, dans lequel l'absorbant de formaldéhyde est le tris(hydroxyméthyl)amino-méthane.

5. Filtre à formaldéhyde chimique selon l'une quelconque des revendications précédentes, dans lequel le mélange comprend en outre un agent tampon alcalin.

6. Filtre à formaldéhyde chimique selon la revendication 5, dans lequel l'agent tampon comprend un ou plusieurs d'un sel d'hydrogénocarbonate et d'un sel de formiate.

7. Filtre à formaldéhyde chimique selon la revendication 5 ou 6, dans lequel l'agent tampon comprend au moins l'un de KHCOO et de KHCO₃.

8. Filtre à formaldéhyde chimique selon l'une quelconque des revendications précédentes, dans lequel le substrat de filtre a une structure en nid d'abeille.

9. Filtre à formaldéhyde chimique selon l'une quelconque des revendications précédentes, dans lequel le matériau de trame poreux est le β-CaSO₄.2H₂O ou le β-CaSO₄.1/2H₂O.

10. Procédé de fabrication d'un filtre à formaldéhyde chimique comprenant :
le mélange d'une solution contenant un absorbant de formaldéhyde avec un matériau de trame poreux ;
la coulée du mélange obtenu dans une structure monolithique et le séchage du mélange coulé ou l'application par revêtement du mélange obtenu sur un substrat et le séchage dudit substrat revêtu, dans lequel l'absorbant de formaldéhyde est un composé chimique d'absorbant de formaldéhyde contenant une amine et le matériau de trame poreux est du plâtre, du gypse à plâtre ou de la chaux.

11. Procédé selon la revendication 10, dans lequel l'étape de séchage est effectuée à une température d'environ 25 °C à environ 150 °C.

12. Procédé selon la revendication 10 ou 11, dans lequel la solution contenant un absorbant de formaldéhyde est une solution aqueuse.

13. Procédé selon la revendication 12, dans lequel la solution aqueuse comprend en outre un agent tampon.

14. Procédé selon la revendication 13, dans lequel l'agent tampon comprend un ou plusieurs de sel d'hydrogénocarbonate et de sel de formiate.

15. Procédé selon la revendication 13 ou 14, dans lequel l'agent tampon comprend au moins l'un de KHCOO et de KHCO₃.
